# EUROPÄISCHE PATENTANMELDUNG

(11) **EP 2 325 836 A1**
(43) Veröffentlichungstag der Anmeldung: **25.05.2011**
(21) Anmeldenummer: 09075518.2
(22) Anmeldetag: 24.11.2009
(51) Int. Cl.: G10L 15/06

(54) **Verfahren und System für das Training von Sprachverarbeitungseinrichtungen**

(71) Anmelder: Deutsche Telekom AG, 53113 Bonn (DE); Technische Universität München, 80333 München (DE)
(72) Erfinder: Burkhardt, Felix, 10551 Berlin (DE); Schuller, Bjorn, 82205 Gilching (DE)
(74) Vertreter: Drosch, Ulrich

(57) **Zusammenfassung**

Die Erfindung betrifft ein Verfahren und ein System für das Training von Einrichtungen zur Verarbeitung von Spracheingaben. Das Training einer entsprechenden Sprachverarbeitungseinrichtung erfolgt dadurch, dass in einer Trainingsphase zu einer Mehrzahl von Sprachsequenzen, welche als Trainingsmenge dienen, jeweils mehrere unterschiedliche Sprecherklassen repräsentierende Sprachmodelle errechnet werden. Diese Sprachmodelle werden in dafür in der betreffenden Sprachverarbeitungseinrichtung ausgebildeten Speichermitteln abgelegt. Beim bestimmungsgemäßen Einsatz der auf diese Weise trainierten Sprachverarbeitungseinrichtung werden die von einer sie benutzenden Person entgegengenommenen Sprachsignale mit den in den Speichermitteln abgelegten Sprachmodellen verglichen. Erfindungsgemäß werden der Sprachverarbeitungseinrichtung in der Trainingsphase zur Errechnung der Sprachmodelle Sprachsequenzen beziehungsweise Sprachsequenzen repräsentierende Datensätze mit Sprachmodellparametern zugeführt, welche mittels einer Sprachsyntheseeinrichtung erzeugt werden oder wurden. Das entsprechende System ist daher so ausgebildet, dass mindestens eine der Signalquellen zur Bereitstellung der Trainingssignale in der Trainingsphase eine Sprachsyntheseeinrichtung ist.

## Beschreibung

Die Erfindung betrifft ein Verfahren und ein System zum Anlernen beziehungsweise für das Training von Einrichtungen der Sprachverarbeitung. Sie bezieht sich dabei sowohl auf die Sprach- und Sprachenerkennung, als auch auf das Problem der Sprecherklassifikation.

Aus der menschlichen Sprache lassen sich unterschiedliche Informationen gewinnen. Neben dem sich aus dem Wortlaut ergebenden Bedeutungsgehalt lassen sich aus dem Gesprochenen auch Informationen über den Sprecher gewinnen. Letzteres betrifft einerseits Merkmale des Sprechers, welche als relativ beziehungsweise nahezu unveränderlich anzusehen sind, wie Informationen über sein Alter, sein Geschlecht oder seine soziale und geographische Herkunft (Soziolekt/Dialekt), und andererseits veränderliche Merkmale, wie den jeweiligen emotionalen und den gesundheitlichen Zustand des Sprechers. Die genannten Informationen sind aus Sprachsequenzen für menschliche Personen - hier freilich gegebenenfalls beeinflusst durch die subjektive Wahrnehmung des Zuhörers - entnehmbar, können aber nach einer akustisch-elektrischen Wandlung des Gesprochenen auch mittels Einrichtungen der Sprachverarbeitung aus Sprachsignalen gewonnen werden. Bei bekannten Einrichtungen der Sprachverarbeitung, wie Einrichtungen zur Spracherkennung, Einrichtungen zur Erkennung der Art der gesprochenen Sprache (Sprachenerkennung) und Einrichtungen zur Sprecherklassifikation, ist es dabei erforderlich, die Einrichtungen entsprechend zu trainieren beziehungsweise anzulernen. Dies geschieht dadurch, dass mit Hilfe statistischer oder anderer Algorithmen aus einer Trainingsmenge von Sprachsignalen Sprachmodelle erzeugt werden, mit denen dann beim Einsatz einer entsprechenden Sprachverarbeitungseinrichtung die zur Laufzeit von dieser entgegengenommenen Sprachsequenzen verglichen und im Sinne einer Sprecherklassifikation einem der in der Trainingsphase erzeugten Sprachmodelle zugeordnet werden. Die Gewinnung entsprechenden Trainingsmaterials ist jedoch oft schwierig und kostspielig. Dies hängt unter anderem damit zusammen, dass die Zuverlässigkeit der Spracherkennung, der Sprachenerkennung oder der Sprecherklassifikation durch eine entsprechende Einrichtung umso höher ist, je ähnlicher das für das Training verwendete Sprachmaterial den im Einsatzfall zu erkennenden Sprachsequenzen ist. Daher macht sich zur Erzielung einer hohen Zuverlässigkeit die Bereitstellung möglichst umfangreichen Trainingsmaterials zum Anlernen der jeweiligen Einrichtung erforderlich. Dies bezieht sich sowohl auf eine möglichst große Anzahl bezüglich des Bedeutungsgehalts unterschiedlicher Sprachsequenzen, als auch darauf inhaltlich gleiche Sprachsequenzen von möglichst vielen unterschiedlichen stimmlichen Charakteren einsprechen zu lassen. Teilweise wird dabei entsprechendes Trainingsmaterial von geschulten Sprechern, insbesondere auch von Schauspielern eingesprochen, die beispielsweise auch in der Lage sind, dieselbe Sprachsequenz mit etwa unterschiedlicher Intonation und/oder Klangfärbung einzusprechen oder diese so zu sprechen, dass sie vermeintlich unterschiedliche emotionale Gemütszustände der sprechenden Person reflektieren. Eine alternative Möglichkeit besteht selbstverständlich darin, die sprachliche Trainingsmenge unter Mitwirkung einer Vielzahl unterschiedlicher Personen zu erstellen. In beiden Fällen ist der Aufwand jedoch beträchtlich, woraus letztlich hohe Kosten für den Vorgang des Anlernens und somit für das jeweilige Produkt selbst entstehen.

Da in der Regel die entsprechende Anwendung beziehungsweise Software für die Sprecherklassifikation zum Zeitpunkt der Entwicklung einer Sprachverarbeitungseinrichtung noch nicht existiert, muss das betreffende System zum Zwecke der Trainingsdatenerhebung in aufwändigen, so genannten "Wizard of Oz"-Verfahren als Dummy-System simuliert werden, damit Testnutzer mit ihm interagieren können. Sowohl die Erstellung des Dummy-Systems als auch die Verpflichtung notwendiger Testnutzer stellen dabei einen erheblichen Kostenfaktor dar. Alternativ muss Sprachmaterial gesammelt und geeignet verschriftet - das heißt in schriftbildlichen Text umgesetzt, mit Annotationen versehen und im Hinblick auf den zeitlichen Beginn sowie das Ende von Phonemen innerhalb einer Sprachsequenz gekennzeichnet beziehungsweise "gelabled" werden, was ebenfalls einen erheblichen Kostenfaktor darstellt und in der Realität praktisch kaum in geeigneter, vollumfassender Vielfalt bezüglich gewünschter Variationen und Abdeckung möglich ist.

Aufgabe der Erfindung ist es, eine Lösung bereitzustellen, durch welche der Aufwand für das Training von Einrichtungen zur Sprachverarbeitung reduziert werden kann, so dass sich die Kosten für eine entsprechende Anlernphase der Einrichtungen verringern. Hierzu sind ein entsprechendes Verfahren und ein System anzugeben.

Die Aufgabe wird durch ein Verfahren mit den Merkmalen des Hauptanspruchs gelöst. Ein die Aufgabe lösendes und zur Durchführung des Verfahrens ausgebildetes System mit einer Spracherkennungseinrichtung ist durch die Merkmale des ersten Sachanspruchs charakterisiert. Vorteilhafte Ausbeziehungsweise Weiterbildungen der Erfindung sind durch die jeweiligen Unteransprüche gegeben.

Bei dem erfindungsgemäßen Verfahren handelt es sich entsprechend dem Titel und der Aufgabenstellung um ein Verfahren für das Training von Sprachverarbeitungseinrichtungen. Grundsätzlich kann der Begriff Sprachverarbeitungseinrichtung sowohl für Einrichtungen stehen, welche der Verarbeitung von ihnen entgegengenommener Sprachsignale dienen, als auch für solche Einrichtungen, mittels welcher eine Verarbeitung von Signalen mit dem Ziel ihrer Aufbereitung für eine Sprachausgabe erfolgt. Im Kontext der vorliegenden Erfindung sowie ihrer nachfolgenden Darstellung und Erläuterung sollen jedoch unter Sprachverarbeitungseinrichtungen ausschließlich Einrichtungen der erstgenannten Art verstanden werden, also Einrichtungen zur Verarbeitung von Spracheingaben.

Mittels des vorgeschlagenen Verfahrens erfolgt das Training einer solchen Sprachverarbeitungseinrichtung in an sich bekannter Weise dadurch, dass in einer Trainingsphase zu einer Mehrzahl von Sprachsequenzen, welche als Trainingsmenge dienen, jeweils mehrere unterschiedliche Sprecherklassen repräsentierende Sprachmodelle errechnet werden. Diese Sprachmodelle werden in dafür in der betreffenden Sprachverarbeitungseinrichtung ausgebildeten Speichermitteln zum Zwecke ihrer späteren Verwendung beim bestimmungsgemäßen Einsatz der betreffenden Sprachverarbeitungseinrichtung abgelegt, wobei die diese Modelle ausbildenden Daten vorzugsweise in einer oder mehreren Datenbanken gehalten werden. Beim bestimmungsgemäßen Einsatz einer solchermaßen trainierten Sprachverarbeitungseinrichtung werden zunächst unbekannte Sprachmuster beziehungsweise Sprachsequenzen und die ihnen zugrunde liegenden Sprachsignale, welche durch die Sprachverarbeitungseinrichtung von einer sie benutzenden Person entgegengenommen werden, mit den in den Speichermitteln abgelegten Sprachmodellen verglichen und dabei auf der Grundlage als solches bekannter Algorithmen die sprechende Person einer Sprecherklasse zugeordnet (Sprecherklassifizierung) und, je nach Beschaffenheit der Sprachverarbeitungseinrichtung und dem für sie vorgesehenen Verwendungszweck, gegebenenfalls außerdem auf die Art der gesprochenen Sprache und/oder auf den Bedeutungsinhalt der jeweiligen Sprachsequenz geschlossen. Letzteres bezieht sich dabei nicht auf eine Erfassung des Bedeutungsinhaltes im Sinne menschlichen Denkens beziehungsweise menschlicher Verstandestätigkeit, sondern vorzugsweise auf eine Umsetzung der Sprachsequenzen in einen nachfolgend oder später auszugebenden schriftbildlichen Text.

Abweichend vom Stand der Technik werden jedoch erfindungsgemäß für das Training einer jeweiligen Sprachverarbeitungseinrichtung nicht Sprachsequenzen natürlichen Ursprungs, also von unterschiedlichen Personen gesprochene Texte verwendet. In erfindungswesentlicher Weise werden der Sprachverarbeitungseinrichtung zur Errechnung der Sprachmodelle vielmehr Sprachsequenzen zugeführt, welche mittels einer Sprachsyntheseeinrichtung erzeugt werden oder wurden.

Dabei werden gemäß einer ersten grundsätzlichen Ausbildungsform der Erfindung die entsprechenden Sprachsequenzen der zu trainierenden Sprachverarbeitungseinrichtung als akustische Sprachsignale zugeführt, also in Form von Sprachsignalen, welche zwar vorzugsweise direkt in Form von Daten an die Sprachverarbeitungseinrichtung übergeben werden, aber gegebenenfalls auch über einen Lautsprecher einem akustisch-elektrischen Wandler der Sprachverarbeitungseinheit zugespielt werden können. Von untergeordneter Bedeutung ist es dabei, ob die entsprechenden akustischen Signale in Echtzeit, also im Moment Ihrer Erzeugung an die zu trainierende Sprachverarbeitungseinrichtung übergeben werden oder zunächst aufgezeichnet beziehungsweise gespeichert und später gegebenenfalls auch über den Lautsprecher einer separaten Wiedergabeeinrichtung ausgegeben werden. Eine zweite grundsätzliche Ausbildungsform des erfindungsgemäßen Verfahrens ist dadurch gegeben, dass auf die Erzeugung eines akustischen Signals und damit auf die Erzeugung einer expliziten Sprachwellenform verzichtet wird und stattdessen als Trainingsmaterial von einer Sprachsyntheseeinrichtung errechnete Datensätze mit Sprachmodellparametern verwendet werden, welche der Sprachverarbeitungseinrichtung in jedem Falle als Daten in Form elektrischer Signale zugeführt werden. Selbstverständlich müssen dazu sowohl an der Sprachsyntheseeinrichtung, als auch an der Sprachverarbeitungseinrichtung entsprechende Datenschnittstellen vorhanden sein.

Durch den Einsatz des erfindungsgemäßen Verfahrens ergeben sich zwei sehr wesentliche Vorteile. Ein großer Vorteil besteht darin, dass sich der Aufwand zur Erzeugung der später von der mittels des Verfahrens trainierten Sprachverarbeitungseinrichtung für die Verarbeitung von Spracheingaben verwendeten Sprachmodelle deutlich reduziert. Anders als nach dem Stand der Technik ist es dabei nicht mehr erforderlich, zur Generierung von unterschiedliche Sprecherklassen repräsentierenden Sprachmodellen eine Mehrzahl speziell ausgesuchter Sprecher und/oder von mit besonderen Fähigkeiten ausgestatteten Sprechern (wie beispielsweise Schauspieler) zu bemühen. Hierdurch reduzieren sich im Ergebnis auch der Kostenaufwand für die Erstellung entsprechender Sprachmodelle und in der Folge dessen schließlich auch die Kosten für die diese Sprachmodelle verwendenden Sprachverarbeitungseinrichtungen. Ein weiterer Vorteil besteht darin, dass es durch den Einsatz der Sprachsynthese möglich ist, in kurzer Zeit sehr viele, das heißt im Grunde nahezu beliebig viele unterschiedliche Sprachmodelle zu generieren, da hierfür aufgrund des Einsatzes von Technik anstelle natürlichen Sprachmaterials eine nahezu unbegrenzte Trainingsmenge bereitgestellt werden kann. Dies wiederum führt letztlich zu einer deutlichen Erhöhung der Erkennungssicherheit von mit entsprechend großen Datenbanken mit einer Vielzahl von Sprachmodellen ausgestatteten Sprachverarbeitungseinrichtungen.

Das erfindungsgemäße Verfahren kann selbstverständlich ebenso für das Training von neu entwickelten Sprachverarbeitungseinrichtungen, im Sinne eines Anlernens, wie zur Verbesserung der Erkennungssicherheit bereits bekannter und gegebenenfalls bereits zumindest teilweise angelernter Sprachverarbeitungseinrichtungen verwendet werden. Entsprechende Sprachverarbeitungseinrichtungen sind soft- und hardwarebasiert. Dabei können die der Sprachverarbeitung, also der Verarbeitung von Spracheingaben zugrunde liegenden Verfahrensweisen und Prinzipien ebenso wie die Sprachsynthese und die hierfür verwendeten Algorithmen grundsätzlich als bekannt angesehen werden. Daher sollen dazu an diese Stelle auch keine näheren Ausführungen gegeben werden. Insoweit sei lediglich darauf verwiesen, dass für die Sprachsynthese beispielsweise Einrichtungen verwendet werden können, welche auf der Grundlage der Synthesesoftware MBROLA arbeiten. Entsprechende Einrichtungen können gegebenenfalls zudem durch die Phonemisierungskomponente Txt2Pho und Komponenten zur Variation der von den mittels ihnen erzeugten Sprachsignalen vermittelten Emotionszustände, wie etwa die insoweit verfügbare Komponente Emofilt, ergänzt sein. Mittels einer entsprechend ausgestatteten Einrichtung zur Sprachsynthese ist es dabei möglich, dass beispielsweise Sprachaspekte, wie die Grundfrequenz von Sprachsequenzen, die Dauer einer Sprachsequenz (nicht zu verwechseln mit der Länge der Sprachsequenz selbst, sondern vielmehr betreffend die zur Wiedergabe einer Sprachsequenz fester Länge benötigte Zeit), die Stimmqualität oder aber die Art und Weise der Artikulation einer jeweiligen Sprachsequenz variiert werden.

Wie bereits ausgeführt, wird gemäß einer zweiten, ebenfalls dem grundsätzlichen erfindungsgemäßen Gedanken der Verwendung mindestens einer Sprachsyntheseeinrichtung zur Bereitstellung von Trainingsmengen für die Generierung von Sprachmodellen folgenden Variante des Verfahrens darauf verzichtet, mittels der für die Durchführung des Verfahrens verwendeten Sprachsyntheseeinrichtung Sprachsignale im eigentlichen Sinne, das heißt gegebenenfalls auch über Lautsprecher wiedergebbare Sprachsignale mit einer Sprachwellenform, zu erzeugen. Stattdessen wird nach dieser Variante lediglich jeweils eine größere Zahl von Datensätzen mit Sprachmodellparametern erzeugt, welche jeweils Sprachsignale einer Sprachsequenz repräsentieren. Die Sprachmodelle werden dabei von der mittels dieser Datensätze zu trainierenden Sprachverarbeitungseinrichtung unmittelbar aus den Datensätzen mit den Sprachmodellparametern durch Anwendung entsprechender, bekannter Algorithmen abgeleitet. Die entsprechenden Datensätze werden von der oder den Sprachsyntheseeinrichtungen unmittelbar über dazu ausgebildete Datenschnittstellen an die Sprachverarbeitungseinrichtung zur Ableitung beziehungsweise Generierung der Sprachmodelle übergeben. Abweichend von der ersten Ausbildungsform ist es dabei nicht möglich, die von der Sprachsyntheseeinrichtung errechneten Daten beziehungsweise Datensätze mit Sprachmodellparametern gegebenenfalls auch als akustische Sprachsignale über Lautsprecher auszugeben. Beiden Verfahrensvarianten ist es jedoch gemeinsam, dass sie darauf beruhen, die für das Training von Sprachverarbeitungseinrichtungen jeweils verwendeten Trainingsmengen (zumindest teilweise) synthetisch zu erzeugen.

Der vorstehend eingeklammert gegebene Hinweis, wonach die entsprechenden für das Training dienenden Trainingsmengen zumindest teilweise synthetisch erzeugt werden, impliziert für den Fachmann unmittelbar, dass es darüber hinaus möglich ist, die mittels der mindestens einen Einrichtung zur Sprachsynthese erzeugten, akustisch wiedergebbaren Sprachsequenzen und/oder die Datensätze mit Sprachmodellparametern, welche Sprachsequenzen repräsentieren, mit Sprachsignalen zu kombinieren, die aus Sprachsequenzen natürlichen Ursprungs gewonnen werden oder wurden.

Wie bereits erwähnt, ist bei bekannten Sprachsyntheseeinrichtungen, welche beispielsweise auf der Grundlage der Synthesesoftware MBROLA oder vergleichbarer Produkte mit gegebenenfalls zusätzlichen Komponenten wie Txt2Pho und/oder Emofilt arbeiten, nicht nur die Möglichkeit gegeben, unterschiedlichste Sprachsequenzen zu erzeugen, sondern darüber hinaus auch diverse Sprachmerkmale zu beeinflussen und damit verschiedene Typen von Sprechern zu simulieren die unterschiedlichen Sprecherklassen angehören.

Im Hinblick auf eine möglichst hohe Variabilität und eine möglichst breite Datenbasis zur Erzeugung vorzugsweise umfangreicher Bibliotheken mit Sprachmodellen sind unter Nutzung dieser Möglichkeiten unterschiedliche Ausgestaltungen für das erfindungsgemäße Verfahren gegeben, wobei gegebenenfalls auch mehrere der nachfolgend genannten Ausgestaltungen des Verfahrens miteinander kombiniert werden können.

So ist beispielsweise eine Ausbildungsform des erfindungsgemäßen Verfahrens vorgesehen, nach welcher der zu trainierenden Sprachverarbeitungseinrichtung zur Errechung der Sprachmodelle wiederholt dieselben Sprachsequenzen und/oder dieselben Sprachsequenzen repräsentierende Datensätze mit Sprachmodellparametern zugeführt werden. Dabei werden jedoch die entsprechenden Sprachsequenzen oder die sie repräsentierenden Datensätze in einer, einer jeweiligen Änderung der Grundfrequenz der gesamten Sprachsequenz entsprechenden Weise variiert. Hierdurch wird der zu trainierenden Sprachverarbeitungseinrichtung die Errechnung beziehungsweise Generierung mehrerer, jeweils geschlechtsspezifischer Sprecherklassen ermöglicht. So können beispielsweise mittels synthetischer Sprachsequenzen mit einer eher hohen Grundfrequenz mehrere weibliche Sprecherklassen oder, mit solchen niedrigerer Grundfrequenz, verschiedene männliche Sprecherklassen generiert werden. In Kombination mit dem zeitlichen Verlauf der Variation des Frequenzspektrums beziehungsweise der Grundfrequenz ist es ferner möglich, Sprecherklassen für unterschiedliche prosodische beziehungsweise Emotionszustände, wie beispielsweise aufgeregt, fröhlich beziehungsweise glücklich, traurig, ängstlich, verärgert oder müde beziehungsweise gelangweilt, zu generieren. Darüber hinaus ist es beispielsweise auch bekannt, dass ein erregter, insbesondere ärgerlicher Zustand eines Sprechers durch erhöhte Amplituden der höheren Frequenzen des Frequenzspektrums einer von ihm artikulierten Äußerung gekennzeichnet ist. Entsprechend ist es vorgesehen, die mindestens eine synthetische Sprachsignale oder sie repräsentierende Sprachmodellparameter bereitstellende Sprachsyntheseeinrichtung so auszubilden, dass die von ihr abgegebenen Signale mit einer solchen Erhöhung der Amplitude höherer Frequenzen korrespondieren.

Eine weitere Ausbildungsform des erfindungsgemäßen Verfahrens ist dadurch gegeben, dass der Sprachverarbeitungseinrichtung zur Errechung der Sprachmodelle wiederholt dieselben Sprachsequenzen und/oder dieselben Sprachsequenzen repräsentierende Datensätze mit Sprachmodellparametern zugeführt werden, bei denen die Signalamplitude innerhalb der jeweiligen Sprachsequenz frequenzunabhängig, das heißt unabhängig vom Frequenzspektrum des Sprachsignals von Durchlauf zu Durchlauf in unterschiedlichen Grenzen schwingt beziehungsweise in analoger Weise die Sprachmodellparameter in den die jeweilige Sprachsequenz repräsentierenden Datensätzen zur Abbildung entsprechender Amplitudenverhältnisse verändert werden. Hierdurch kann ein so genanntes "Schimmern" der Stimme eines Sprechers simuliert werden. Ein derartiges Schimmern ist charakteristisch für Sprachsignale älterer Personen. Dabei kann gegebenenfalls auch das grundsätzliche Schwingen der Amplitude dem zuvor erläuterten Amplitudenverlauf, nämlich einem Amplitudenverlauf mit einer Erhöhung der Amplitude höherfrequenter Anteile, überlagert werden.

Eine weitere Möglichkeit der Verfahrensgestaltung besteht darin, bei der ebenfalls wiederholten Zuführung von gleichen Sprachsequenzen beziehungsweise dieselben Sprachsequenzen repräsentierenden Datensätzen zu der Sprachverarbeitungseinrichtung von Durchlauf zu Durchlauf, bezogen auf die durch die Grundfrequenz des Signalspektrums bestimmte Periode, beim Ablauf jeder zweiten Periode die Amplitude des Signals unterschiedlich stark abzusenken. Sofern dabei die entsprechenden Sprachsequenzen der Sprachverarbeitungseinrichtung nicht als Sprachsignale mit einer Sprachwellenform, sondern in Form entsprechende Sprachsequenzen repräsentierender Datensätze zugeführt werden, ist es selbstverständlich auch hierbei möglich, in analoger Weise die Sprachmodellparameter zur Abbildung entsprechender Verhältnisse des zeitlichen Amplitudenverlaufs zu verändern. Hierdurch wird ein mehr oder weniger starkes, so genanntes "Knarren" der Stimme eines Sprechers simuliert. Auch dieser Amplitudenverlauf kann gegebenenfalls den zuvor erläuterten überlagert werden.

Darüber hinaus ist es selbstverständlich auch noch möglich, bei der Zuführung der jeweils selben Sprachsequenzen in mehreren Durchläufen beziehungsweise bei der wiederholten Zuführung dieselben Sprachsequenzen repräsentierender Datensätze mit Sprachmodellparametern die Sprechgeschwindigkeit zu variieren. Hierdurch wird die Sprachverarbeitungseinrichtung beispielsweise bei einer geringen Sprechgeschwindigkeit auf die Erkennung eines eher müden Sprechers beziehungsweise die Spracherkennung von einem solchen Sprecher gesprochener Worte trainiert. Im Gegensatz dazu wird ein eher aufgeweckter beziehungsweise freudiger Sprecher durch die Erhöhung der Sprechgeschwindigkeit simuliert. Selbstverständlich ist es auch hier wieder möglich, derartiges zu simulieren, indem in analoger Weise entsprechende Sprachmodellparameter in den Datensätzen variiert werden.

Weitere Möglichkeiten der Beeinflussung der Sprachsignale zur Simulation unterschiedlicher Gefühlszustände einer sprechenden Person bestehen darin, bei jeweils gleichen Sprachsequenzen von Durchlauf zu Durchlauf innerhalb einer jeweiligen Sprachsequenz für betont gesprochene Silben oder für die jeweils letzte Silbe eines Wortes die Grundfrequenz unterschiedlich stark anzuheben oder abzusenken. Ferner können von Durchlauf zu Durchlauf die Grundfrequenz auf Silben- oder Satzniveau unterschiedlich stark variiert oder die jeweils gleiche Sprachsequenz mit unterschiedlich stark schwankender Stimmqualität wiedergegeben werden. Durch die vorgenannten Variationen, welche selbstverständlich auch wieder in analoger Weise durch eine entsprechende Variation dies abbildender Sprachmodellparameter in Sprachsequenzen repräsentierenden Datensätzen realisierbar sind, können Emotionen wie Glück, Freude, Traurigkeit, Angst oder großer Ärger simuliert werden.

An dieser Stelle sei nochmals darauf hingewiesen, dass die zuvor erläuterten Maßnahmen der unterschiedlichen Beeinflussung synthetisch erzeugter Sprachsignale beziehungsweise entsprechender, solche Sprachsignale repräsentierender Datensätze grundsätzlich bekannt und daher nicht Gegenstand der Erfindung sind. Beispielsweise mit den teilweise auch frei verfügbaren Lösungen MBROLA, Text2Pho und Emofilt stehen dem Fachmann bereits heute entsprechende Möglichkeiten zur Verfügung.

Neben der Beeinflussung des sprachlichen Klangbildes beziehungsweise der ein solches Klangbild repräsentierenden Datensätze und der diese Datensätze ausbildenden Sprachmodellparameter ist es außerdem möglich, einer Sprachverarbeitungseinrichtung in der Trainingsphase wiederholt Sprachsequenzen zuzuführen, welche zwar durch Verwendung gleicher Wörter jeweils denselben Bedeutungsinhalt haben, aber aufgrund unterschiedlicher Wortstellung verschiedene Soziolekte verkörpern. Auch hierbei kann Entsprechendes durch die Zuführung akustischer Signale oder durch die unmittelbare Übergabe von Datensätzen an die Sprachverarbeitungseinrichtung erfolgen.

Das die Aufgabe lösende und zur Durchführung des Verfahrens ausgebildete System für das Training von Sprachverarbeitungseinrichtungen besteht aus der jeweiligen zu trainierenden Sprachverarbeitungseinrichtung selbst und einer oder mehreren Signalquellen zur Bereitstellung von dieser Sprachverarbeitungseinrichtung in der Trainingsphase zur Errechnung der Sprachmodelle zuzuführenden Trainingssignalen. Dabei weist die zu trainierende Sprachverarbeitungseinrichtung in bekannter Weise Mittel zur Entgegennahme und zur akustisch-elektrischen Wandlung von Spracheingaben, eine Steuer- und Verarbeitungseinrichtung und Speichermittel zur Speicherung von durch die Steuer- und Verarbeitungseinrichtung in einer Trainingsphase errechneten und von der Sprachverarbeitungseinrichtung beim bestimmungsgemäßen Einsatz für die Sprachverarbeitung verwendeten Sprachmodellen auf. Erfindungsgemäß ist jedoch bei einem derartigen System, abweichend vom Stand der Technik, mindestens eine der Signalquellen zur Bereitstellung der Trainingssignale eine Sprachsyntheseeinrichtung. Durch diese werden entsprechend dem zuvor beschriebenen Verfahren der Sprachverarbeitungseinrichtung akustische Sprachsignale zugeführt oder aber Sprachsequenzen repräsentierende Datensätze mit Sprachmodellparametern generiert und als Datenströme in Form elektrischer Signale über eine dazu ausgebildete Schnittstelle an die Sprachverarbeitungseinrichtung übergeben. Einer zuvor erläuterten möglichen Ausgestaltungsform des Verfahrens zufolge, kann das System außerdem dadurch weitergebildet sein, dass es neben der mindestens einen Sprachsyntheseeinrichtung mindestens eine weitere Signalquelle zur Bereitstellung von Sprachsignalen natürlichen Ursprungs aufweist.

Die Erfindung soll nachfolgend anhand von Beispielen nochmals erläutert werden. Hierzu zeigen:
- Fig.1:: ein Ablaufschema zur Beschreibung der Trainingsphase einer Sprachverarbeitungseinrichtung sowie eines Sprachverarbeitungsvorgangs beim bestimmungsgemäßen Einsatz der Sprachverarbeitungseinrichtung,
- Fig. 2:: ein die Abläufe gemäß der Erfindung sowie die Komponenten des Systems und ihr Zusammenwirken beschreibendes Strukturschaubild.

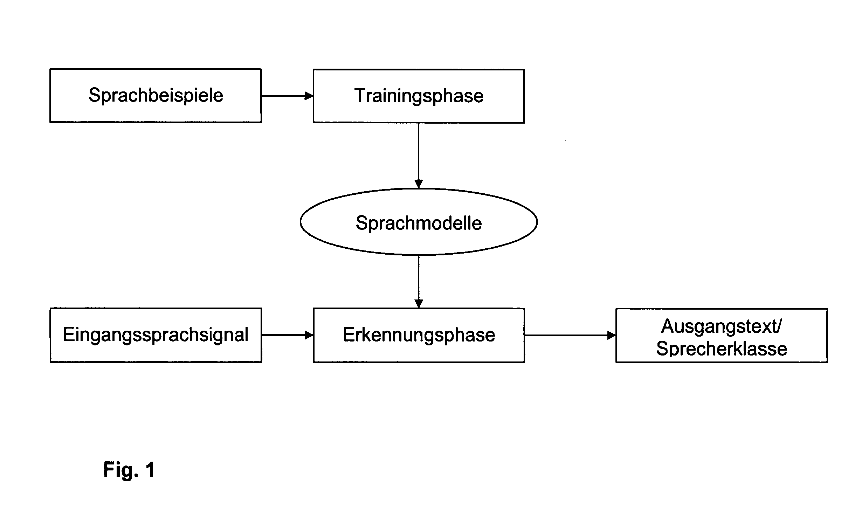

Die Fig. 1 verdeutlicht in der Art eines Ablaufschemas die Vorgänge beim Training beziehungsweise beim Anlernen und beim späteren Einsatz einer Sprachverarbeitungseinrichtung. Danach werden der Sprachverarbeitungseinrichtung in einer Trainingsphase Sprachbeispiele beziehungsweise Sprachsequenzen zugeführt, auf deren Grundlage die Sprachverarbeitungseinrichtung mit Hilfe entsprechender implementierter Algorithmen eine Mehrzahl unterschiedlicher Sprecherklassen repräsentierende Sprachmodelle berechnet. Diese Sprachmodelle kommen beim späteren Einsatz der Sprachverarbeitungseinrichtung in der so genannten Erkennungsphase zum Einsatz. Dabei wird der Sprachverarbeitungseinrichtung bei ihrem bestimmungsgemäßen Einsatz eine Sprachsequenz als Eingangssignal zugeführt, welche durch ihre Steuer- und Verarbeitungseinrichtung zur Erkennung mit den zuvor in der Trainingsphase errechneten Sprachmodellen verglichen wird. Das Erkennungsergebnis wird vorzugsweise in visueller beziehungsweise textlicher Form ausgegeben. Bei dem Ergebnis kann es sich je nach dem vorgesehenen Einsatzzweck der Sprachverarbeitungseinrichtung und ihrem Aufbau beispielsweise lediglich um die Angabe einer Sprecherklasse handeln, welcher die das Sprachsignal einsprechende Person zuzuordnen ist. Sofern es sich bei der Sprachverarbeitungseinrichtung um eine Spracherkennungseinrichtung handelt, wird diese darüber hinaus aus der Eingangssprachsequenz auf deren Bedeutungsinhalt schließen, wobei zur eigentlichen Spracherkennung für den Erhalt eines möglichst zuverlässigen Ergebnisses vorzugsweise ebenfalls zunächst eine Klassifikation des Sprechers erfolgt. Dabei erleichtert die Zuordnung des Sprechers zu einer Sprecherklasse die Erkennung des eigentlichen Bedeutungsinhalts der jeweiligen Sprachsequenz beziehungsweise erhöht die Zuverlässigkeit dieser Erkennung.

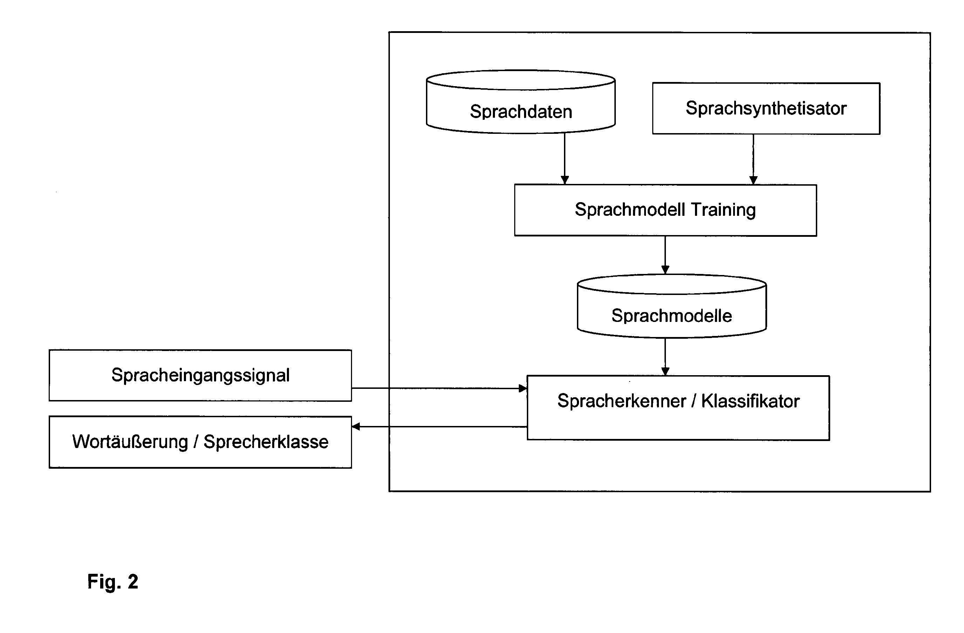

Die Fig. 2 stellt ein Strukturschaubild dar, welches sowohl vorrichtungsbezogene Aspekte der Erfindung, nämlich ein dem Training einer Sprachverarbeitungseinrichtung dienendes System und dessen Teile, als auch den Verfahrensablauf bei der Sprachverarbeitung und dem vorausgehenden Training einer Sprachverarbeitungseinrichtung symbolisiert. Das hierdurch beispielhaft veranschaulichte System besteht aus der zu trainierenden Sprachverarbeitungseinrichtung selbst und aus einer oder mehreren Signalquellen zur Bereitstellung von der betreffenden Sprachverarbeitungseinrichtung in der Trainingsphase zur Errechnung von Sprachmodellen zuzuführenden Trainingssignalen. In der Trainingsphase erfolgt mit Hilfe der von den Signalquellen bereitgestellten Trainingssignale ein Sprachmodell-Training, bei welchem durch die Sprachverarbeitungseinrichtung, im Beispiel einem Spracherkenner und/oder einem Sprachklassifikator, das heißt einer Sprachverarbeitungseinrichtung zur Erkennung von Sprecherklassen, Sprachmodelle berechnet werden. Die hier durch ein gesondertes Symbol gekennzeichneten, durch die Sprachverarbeitungseinrichtung errechneten Sprachmodelle werden in einem Speicher der Sprachverarbeitungseinrichtung vorzugsweise in Form mindestens einer Datenbank für den späteren bestimmungsgemäßen Einsatz der Einrichtung abgelegt. Dem Grundgedanken der Erfindung folgend ist eine der die Trainingssignale zur Verfügung stellenden Signalquellen als eine Sprachsyntheseeinrichtung (Sprachsynthetisator) ausgebildet. Diese übergibt die von ihr generierten, jeweils Sprachsequenzen darstellenden Signale an die zu trainierende Sprachverarbeitungseinrichtung entweder in akustischer Form, das heißt in Form gegebenenfalls auch über Lautsprecher wiedergebbarer Sprachsignale, oder in Form von entsprechende Sprachsequenzen repräsentierenden Datensätzen mit Sprachmodellparametern. Während im erstgenannten Fall die synthetisch erzeugten Sprachsignale eine Sprachwellenform aufweisen, werden bei einem Verzicht auf die Sprachwellenform die dem Training dienenden Sprachsequenzen in Form von sie repräsentierenden Datensätzen mit Sprachmodellparametern über elektrische Schnittstellen der Sprachsyntheseeinrichtung (des Sprachsynthetisators) und der Sprachverarbeitungseinrichtung an die Sprachverarbeitungseinrichtung beziehungsweise deren Steuer- und Verarbeitungseinheit übergeben. Die von der Sprachverarbeitungseinrichtung in der Trainingsphase errechneten Sprachmodelle werden, wie bereits ausgeführt, in einer Datenbank der Sprachverarbeitungseinrichtung gespeichert und von dieser im Einsatzfall herangezogen, um ein eingehendes Sprachsignal im Wege des Vergleichs zu verarbeiten beziehungsweise zu erkennen und schließlich ein Ergebnis in Form einer dem Sprecher zugeteilten Sprecherklasse oder in Form eines die erkannte Sprachsequenz repräsentierenden Textes auszugeben.

In der Trainingsphase werden die in der Datenbank zu hinterlegenden Sprachmodelle von der Sprachverarbeitungseinrichtung auf der Grundlage umfangreichen, insbesondere von der Sprachsyntheseeinrichtung bereitgestellten Trainingsmaterials berechnet. Dabei umfasst das Trainingmaterial gegebenenfalls auch vielfach wiederholte Sprachsequenzen gleichen Inhalts, bei denen aber akustische Parameter oder ihre Entsprechungen in Datensätzen mit Sprachmodellparametern unter unterschiedlichen Gesichtspunkten, wie Alter, Geschlecht, Emotion, Gesundheitszustand des vermeintlichen Sprechers wiederholt werden. Die Variation dieser Parameter erfolgt nach den schon genannten Prinzipien der Beeinflussung von Grundfrequenz, Frequenzspektrum, Amplitude beziehungsweise des Wechselverhältnisses von jeweiliger Frequenz und Amplitude sowie des zeitlichen Signalverlaufs.

Neben der Variation von akustischen Parametern können ferner auch phonetische und linguistische Vertauschungsregeln zum Tragen kommen. Um beispielsweise sprachlichen Dialekt zu erkennen, wird synthetisch Sprache der jeweiligen Zieldialekte nach phonetischen und linguistischen Substitutionsregeln erzeugt. Dieses Prinzip kann unmittelbar auch zur Erkennung verschiedener Fremdsprachen eingesetzt werden. Sprachproben können hier in verschiedenen Sprachen synthetisiert werden, wobei gegebenenfalls zum Beispiel auch bewusst das Regelwerk und Phoneminventar im Widerspruch zur Textsprache gewählt werden kann, um so einen nichtmuttersprachlichen Sprecher ("amerikanisches Deutsch" oder "französisches Englisch") in einer Vielzahl von Klangbeispielen und sprachübergreifenden Kreuzungen als Trainingsmaterial zu erzeugen.

Im Rahmen der Spracherkennung ist es vorteilhaft, insbesondere zum Lernen so genannter Ganzwort-, oder (Halb-)Silbenmodelle, das heißt ganzer Wörter, zum Beispiel für das Erkennen von Schlüsselwörtern, oder Sprachen mit geringen Lernressourcen, gemäß der Erfindung synthetische Sprache als Lernmaterial einzusetzen. Als Werkzeuge für Spracherkennung stehen dabei beispielsweise die frei verfügbaren Produkte HTK, Julius oder Sphinx zur Verfügung. Da nachweislich auch der Sprecherzustand eine entscheidende Rolle beim Lernen spielt, können auch hier die oben beschriebenen Parametervariationen vollzogen werden, um Sprache unterschiedlicher Emotion, unterschiedlichen Geschlechts, Alters und Gesundheitszustands oder dergleichen zu erhalten. Zudem können auch Modelle für gesungene Sprache gelernt werden. So kann beispielsweise passend zu einem bekannten Melodieverlauf Sprache synthetisiert werden, um den Vergleich zu erleichtern. Auch der Sprecherzustand und -typ kann alternativ oder sogar ergänzend zur Laufzeit von einem geeigneten Klassifikator bestimmt werden, um Sprache passend hierzu zu erzeugen.

Das erfindungsgemäße Verfahren ist äußerst kostengünstig und liefert potentiell eine höhere Qualität als die Nutzung von applikationsfremden Daten. Mittels des Verfahrens können durch die Nutzung der Sprachsynthese nahezu beliebig große Trainingsmengen mit im Grunde beliebiger Parametrierung erzeugt und für das Training von Sprachverarbeitungseinrichtungen zur Verfügung gestellt werden. Nicht zuletzt sind die erzeugten Daten dabei auch (je nach Syntheseverfahren) weitgehend oder komplett frei von akustischen Störungen, die bei der Aufzeichnung menschlicher Sprache unvermeidlich sind. Es können aber gegebenenfalls auch gezielt Störungen eingebracht werden, falls dies für den Anwendungsfall vorteilhaft ist. Entsprechendes kann beispielsweise sinnvoll sein für das Training von später in Kraftfahrzeugen einzusetzenden Spracherkennungseinrichtungen. In diesem Fall wird der Tatsache Rechnung getragen, dass die von derartigen Einrichtungen zu erkennenden Sprachsignale in der Praxis von Störsignalen wie Fahrgeräuschen und dergleichen begleitet sind. Derartige Störungen können durch eine für das Training solcher Sprachverarbeitungseinrichtungen verwendete Sprachsyntheseeinrichtungen ohne weiteres nachgebildet werden. Im Hinblick auf den so genannten Lombard-Effekt, nach welchem ein natürlicher Sprecher sein Sprachverhalten außerdem an das Auftreten eventueller Umgebungsgeräusche anpasst (insbesondere Erhöhung der Sprachlautstärke), ist es ferner möglich, auch eine solche Veränderung des Sprachverhaltens mittels synthetisch erzeugter Sprachsequenzen nachzuahmen beziehungsweise dies berücksichtigende Datensätze mit entsprechenden Sprachmodellparametern zu generieren.

Durch die Erfindung ergibt sich zudem der Vorteil, dass durch die unmittelbare Übergabe der synthetisch erzeugten Sprachsequenzen beziehungsweise der sie repräsentierenden Datensätze an die zu trainierende Sprachverarbeitungseinrichtung die phonetische zeitlich exakte Verschriftung automatisch als Bestandteil entsprechender Sprachdaten mit verfügbar ist, so dass ein gesondertes Labeling im Hinblick auf die zeitliche Aufzeichnung des Beginns und Endes von Phonemen innerhalb einer Sprachsequenz entbehrlich ist.

Das Verfahren wurde zu Versuchszwecken am Beispiel der Emotionserkennung implementiert, wobei neben der grundsätzlichen Machbarkeit anhand des Klassifikationserfolgs, sogar eine Überlegenheit gegenüber dem Gebrauch von natürlichen Fremddaten als Trainingsmenge nachgewiesen werden konnte.

## Patentansprüche

1. Verfahren für das Training von Sprachverarbeitungseinrichtungen, nämlich von Einrichtungen zur Verarbeitung von Spracheingaben, nach welchem für eine jeweilige Sprachverarbeitungseinrichtung in einer Trainingsphase zu einer Mehrzahl, als Trainingsmenge dienender Sprachsequenzen jeweils mehrere, unterschiedliche Sprecherklassen repräsentierende Sprachmodelle errechnet und in dafür in der betreffenden Sprachverarbeitungseinrichtung ausgebildeten Speichermitteln für die spätere Verwendung beim bestimmungsgemäßen Einsatz der Sprachverarbeitungseinrichtung abgelegt werden, **dadurch gekennzeichnet, dass** der Sprachverarbeitungseinrichtung zur Errechnung der Sprachmodelle Sprachsequenzen zugeführt werden, welche aus mittels mindestens einer Einrichtung zur Sprachsynthese erzeugten Sprachsignalen bestehen.

2. Verfahren für das Training von Sprachverarbeitungseinrichtungen, nämlich von Einrichtungen zur Verarbeitung von Spracheingaben, nach welchem für eine jeweilige Sprachverarbeitungseinrichtung in einer Trainingsphase zu einer Mehrzahl, als Trainingsmenge dienender, jeweils durch Datensätze mit Sprachmodellparametern repräsentierter Sprachsequenzen jeweils mehrere, unterschiedliche Sprecherklassen repräsentierende Sprachmodelle errechnet und in dafür in der betreffenden Sprachverarbeitungseinrichtung ausgebildeten Speichermitteln für die spätere Verwendung beim bestimmungsgemäßen Einsatz der Sprachverarbeitungseinrichtung abgelegt werden, **dadurch gekennzeichnet, dass** der Sprachverarbeitungseinrichtung zur Errechnung der Sprachmodelle Datensätze mit Sprachmodellparametern zugeführt werden, welche mittels mindestens einer Einrichtung zur Sprachsynthese berechnet wurden oder werden.

3. Verfahren nach Anspruch 1 oder 2, **dadurch gekennzeichnet, dass** der Sprachverarbeitungseinrichtung zur Errechnung der Sprachmodelle wiederholt dieselben Sprachsequenzen und/oder dieselben Sprachsequenzen repräsentierende Datensätze mit Sprachmodellparametem zugeführt werden, welche von Durchlauf zu Durchlauf bezüglich der Grundfrequenz des Signalspektrums beziehungsweise bezüglich der die Grundfrequenz in den Datensätzen zur jeweiligen Sprachsequenz abbildenden Sprachmodellparameter variieren.

4. Verfahren nach einem der Ansprüche 1 bis 3, **dadurch gekennzeichnet, dass** der Sprachverarbeitungseinrichtung zur Errechnung der Sprachmodelle in mehreren Durchläufen wiederholt dieselben Sprachsequenzen und/oder dieselben Sprachsequenzen repräsentierende Datensätze mit Sprachmodellparametern zugeführt werden, bei welchen von Durchlauf zu Durchlauf die Signalamplitude innerhalb der jeweiligen Sprachsequenz in unterschiedlichen Grenzen schwingt beziehungsweise in analoger Weise die Sprachmodellparameter in den die jeweilige Sprachsequenz repräsentierenden Datensätzen zur Abbildung entsprechender Amplitudenverhältnisse verändert werden.

5. Verfahren nach einem der Ansprüche 1 bis 4, **dadurch gekennzeichnet, dass** der Sprachverarbeitungseinrichtung zur Errechnung der Sprachmodelle in mehreren Durchläufen wiederholt dieselben Sprachsequenzen und/oder dieselben Sprachsequenzen repräsentierende Datensätze mit Sprachmodellparametern zugeführt werden, bei welchen von Durchlauf zu Durchlauf die höherfrequenten Anteile des Signalspektrums in ihrer Amplitude gegenüber den niederfrequenten Anteilen unterschiedlich stark erhöht beziehungsweise in analoger Weise die Sprachmodellparameter in den die jeweilige Sprachsequenz repräsentierenden Datensätzen zur Abbildung entsprechender frequenzabhängiger Amplitudenverhältnisse verändert werden.

6. Verfahren nach einem der Ansprüche 1 bis 5, **dadurch gekennzeichnet, dass** der Sprachverarbeitungseinrichtung zur Errechnung der Sprachmodelle in mehreren Durchläufen wiederholt dieselben Sprachsequenzen und/oder dieselben Sprachsequenzen repräsentierende Datensätze mit Sprachmodellparametern zugeführt werden, bei welchen von Durchlauf zu Durchlauf, bezogen auf die durch die Grundfrequenz des Signalspektrums bestimmte Periode, beim Ablauf jeder zweiten Periode die Amplitude des Signals unterschiedlich stark abgesenkt wird beziehungsweise in analoger Weise die Sprachmodellparameter in den die jeweilige Sprachsequenz repräsentierenden Datensätzen zur Abbildung entsprechender Verhältnisse des zeitlichen Amplitudenverlaufs verändert werden.

7. Verfahren nach einem der Ansprüche 1 bis 6, **dadurch gekennzeichnet, dass** der Sprachverarbeitungseinrichtung zur Errechnung der Sprachmodelle in mehreren Durchläufen wiederholt dieselben Sprachsequenzen und/oder dieselben Sprachsequenzen repräsentierende Datensätze mit Sprachmodellparametern zugeführt werden, wobei von Durchlauf zu Durchlauf die Sprechgeschwindigkeit beziehungsweise in analoger Weise die Sprachmodellparameter variiert werden, welche eine entsprechende Änderung der Sprechgeschwindigkeit in den die jeweilige Sprachsequenz repräsentierenden Datensätzen abbilden.

8. Verfahren nach einem der Ansprüche 1 bis 7, **dadurch gekennzeichnet, dass** der Sprachverarbeitungseinrichtung zur Errechnung der Sprachmodelle in mehreren Durchläufen wiederholt dieselben Sprachsequenzen und/oder dieselben Sprachsequenzen repräsentierende Datensätze mit Sprachmodellparametern zugeführt werden, wobei von Durchlauf zu Durchlauf innerhalb der Sprachsequenzen für betont gesprochene Silben oder für die jeweils letzte Silbe eines Wortes die Grundfrequenz unterschiedlich stark angehoben oder abgesenkt wird oder in analoger Weise die Sprachmodellparameter variiert werden, welche eine entsprechende Änderung der Grundfrequenz in den die jeweilige Sprachsequenz repräsentierenden Datensätzen abbilden.

9. Verfahren nach einem der Ansprüche 1 bis 8, **dadurch gekennzeichnet, dass** der Sprachverarbeitungseinrichtung zur Errechnung der Sprachmodelle in mehreren Durchläufen wiederholt dieselben Sprachsequenzen und/oder dieselben Sprachsequenzen repräsentierende Datensätze mit Sprachmodellparametern zugeführt werden, wobei von Durchlauf zu Durchlauf die Grundfrequenz auf Silben- oder Satzniveau unterschiedlich stark variiert wird oder in analoger Weise die Sprachmodellparameter variiert werden, welche eine entsprechende Variation der Grundfrequenz in den die jeweilige Sprachsequenz repräsentierenden Datensätzen abbilden.

10. Verfahren nach einem der Ansprüche 1 bis 9, **dadurch gekennzeichnet, dass** der Sprachverarbeitungseinrichtung zur Errechnung der Sprachmodelle in mehreren Durchläufen wiederholt dieselben Sprachsequenzen und/oder dieselben Sprachsequenzen repräsentierende Datensätze mit Sprachmodellparametern zugeführt werden, wobei von Durchlauf zu Durchlauf die Stimmqualität unterschiedlich schwankend variiert wird oder in analoger Weise die Sprachmodellparameter variiert werden, welche entsprechende Schwankungen der Stimmqualität in den die jeweilige Sprachsequenz repräsentierenden Datensätzen abbilden.

11. Verfahren nach einem der Ansprüche 1 bis 10, **dadurch gekennzeichnet, dass** der Sprachverarbeitungseinrichtung zur Errechnung der Sprachmodelle in mehreren Durchläufen wiederholt Sprachsequenzen mit durch Verwendung gleicher Wörter selben Bedeutungsinhalt und/oder Sprachsequenzen selben Bedeutungsinhalts repräsentierende Datensätze mit Sprachmodellparametern zugeführt werden, wobei die den Bedeutungsinhalt der jeweiligen Sprachsequenz bestimmenden Wörter jeweils in ihrer Reihenfolge verändert werden.

12. Verfahren nach einem der Ansprüche 1 bis 11, **dadurch gekennzeichnet, dass** die mittels der mindestens einen Einrichtung zur Sprachsynthese erzeugten Sprachsignale und/oder errechneten, Sprachsignale repräsentierenden Datensätze mit Sprachmodellparametern mit aus Sprachsequenzen natürlichen Ursprungs gewonnenen Sprachsignalen kombiniert werden.

13. System für das Training von Sprachverarbeitungseinrichtungen, nämlich von Einrichtungen zur Verarbeitung von Spracheingaben, bestehend aus
a) einer jeweiligen, zu trainierenden Sprachverarbeitungseinrichtung mit Mitteln zur Entgegennahme und akustisch-elektrischen Wandlung von Spracheingaben, einer Steuer- und Verarbeitungseinrichtung und mit Speichermitteln zur Speicherung von durch die Steuer- und Verarbeitungseinrichtung in einer Trainingsphase errechneten und von ihr beim bestimmungsgemäßen Einsatz der Verarbeitungseinrichtung für die Sprachverarbeitung verwendeten Sprachmodellen,
b) einer oder mehren Signalquellen zur Bereitstellung von der betreffenden Sprachverarbeitungseinrichtung in der Trainingsphase zur Errechnung der Sprachmodelle zuzuführenden Trainingssignalen, **dadurch gekennzeichnet, dass** die Signalquelle oder mindestens eine der Signalquellen zur Bereitstellung der Trainingssignale in der Trainingsphase eine Sprachsyntheseeinrichtung ist.

14. System nach Anspruch 13, **dadurch gekennzeichnet, dass** dieses mindestens eine Sprachsyntheseeinrichtung zur Generierung akustisch wiedergebbarer synthetischer Sprachsignale aufweist.

15. System nach Anspruch 13 oder 14, **dadurch gekennzeichnet, dass** dieses mindestens eine Signalquelle zur Bereitstellung von Sprachsignalen natürlichen Ursprungs aufweist.
